# EUROPEAN PATENT APPLICATION

(11) **EP 0 559 125 A1**
(43) Date of publication of application: **08.09.1993**
(21) Application number: 93103251.0
(22) Date of filing: 01.03.1993
(51) Int. Cl.: A23L 3/3472, A23L 3/40, A23L 3/42, A23L 1/214

(54) **Process for the production of preservative edible supplements for food etc.**

(30) Priority: 02.03.1992 JP 81539/92
(71) Applicant: Kusano, Keigo, Kikuchi-gun, Kumamoto-ken (JP); MITSUI KOUZAN KABUSHIKI KAISHA, Tokyo (JP)
(72) Inventor: Kusano,Keigo, Kikuchi-gun Kumamoto-ken (JP); Hayashida,Naomasa, Tochigi-ken (JP); Matsunaga,Osamu, Tochigi-ken (JP)
(74) Representative: Leyh, Hans, Dr.-Ing.

(57) **Abstract**

A process for the production of preservative edible supplements for food etc. from rootcrops, while retaining the useful components in the plant body of the original rootcrop at a more higher proportion under prevention of deterioration of the product quality, by procesing them into dry powder, charactrized by the process steps, which comprise
placing the rootcrop in a closed vessel,
subjecting the rootcrop to chopping or cutting while evacuating the vessel to a vacuum,
effecting a primary drying, followed by injection of an inert gas consisting of nitrogen or any other thereinto,
crushing the rootcrop,
spraying a synergist onto the crushed mass,
spraying a dry distillation liquid extract thereonto,
effecting a second drying of the resulting mass and
mixing the dried mass to a dispersed state, said process steps being realized successively or in any combination.

## Description

### FIELD OF THE INVENTION

The present invention relates to a process for the production of preservative edible supplements for preserving food etc. from rootcrops by processing them into dry powder without the effective components to be injured thereby.

### BACKGROUND OF THE INVENTION

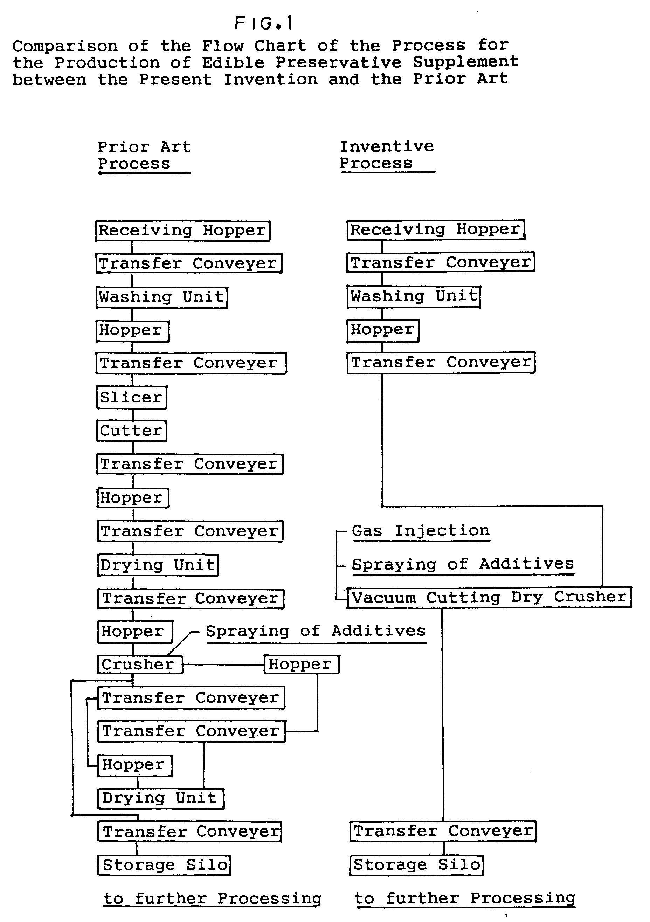

For processing a raw material of vegetable or fruit into dry powder, the process has heretofore been realized usually in process steps as shown in the flow chart of Fig. 1. Such a process is accompanied by the following problems:
1) A large number of devices and instruments have to be employed due to separate furnishment of each individual device and instrument for each unit operation together with the requisite insertion of handling arrangements and cushioning tanks between them.
2) The operation of such a large number of devices and instruments is bothersome with annoying maintenance works.
3) It requires a higher investment and a larger site due to installation of such a large number of devices and instruments.
4) A larger costs are required for the administration of operation of the apparatuses.
5) A deterioration of the product quality is incidental to the process steps of cutting and slicing, handling and crushing of the raw material due to air oxidation.
6) Due to the extended period of each processing for the handling and drying, the productivity is low with facilitated deterioration of the product quality.
7) A product quality deterioration due to the heat generation upon the crushing operation occurs.
8) The processing instruments and devices will be stained by deposition and clinging of the processed material during the handling operations after the spraying of the liquid additives.
9) Since the injection of the processing gas is carried out in general at ordinary pressure, there is some difficulty in its sufficient permeation into the interior of the material being processed.
10) By the gas injection, an objectionable odour is caused to occur in the processed material.

A preservative edible supplement for food etc. is employed for increasing the preservativity, namely, the durability of a food product etc. as a whole, together with the primary raw materials of such food product etc. Many rootcrops possess a potentiality for being employed as a preservative supplement for food etc. However, rootcrops are present in general with irregular sizes and shapes and are not easily processed into commercial products. They are supplied from agricultural firms usually without removing petioles and stalks which are discarded hitherto due to lack of any pertinent processing technique in despite of that they possess, in many cases, an adaptability for being used also as preservative supplement.

In order to adapt to the general demand for using a raw crop material as a preservative supplement, it is necessary to process the raw material into a dry powdery form. In the conventional techniques for such processing, however, a deterioration of the product quality may, in many cases, not be evaded, so that the product becomes inactive as a preservative supplement.

A preservative supplement is, in itself, a food product and should have, in addition, the preservative property as well as the intrinsic properties for such food product, such as, nutrition, favourable taste, fragrance, biofunctionality controlling activity and so on. Thus, it is necessary for processing the raw material into a dry pulverous product to evade any decomposition of the effective components of the raw material by heat or by oxidation during the drying process step and to prevent any deterioration of the product hue and fragrance.

Any deterioration in such properties will be facilitated when the temperature is higher and when the duration of exposure to a given temperature is longer. It is desirable to realize the drying operation at a temperature as low as possible and for a duration as short as possible, though such might not apply simply for the case may be, since there are quite many possibilities of intricate combination of conditions, such as, each specific raw material employed, the contemplated product quality, temperature, processing duartion and so on, for choosing a practical operation among the techniques of higher temperature/short period and lower temperature/long period.

Contrivances have been proposed on the ground of such stand of the technique to improve the product quality and to prevent the deterioration thereof, inclusive of a proposal of low temperature and shorter period processing.

Technical measures of cutting of the raw crop material into a small size for facilitating the drying thereof by increasing the effective evaporation surface area, agitation of the raw material and elevation of the processing temperature have hitherto been employed in general in view of attaining a short period drying. These measures exhibit a positive contribution by the attainment of preservation of the favourable properties of the raw material by the prompt drying and a negative contribution due to the mechanical processing of the raw material.

Freeze drying, which is superior in preserving the original properties of the raw crop material but is costly in the installation and in the operation, has found its application only for the case where other technique can difficultly be employed in replacement therewith.

Hot air drying, which has been employed most widely, is apt to suffer from increased costs for both the installation and operation where any thermal deterioration of the product quality is to be avoided, since the operation therefor should be realized by a warm air at a relatively low temperature. There is a limitation in itself in the achievement of prevention of deterioration of the product quality by oxygen and by heat even by operating in an optimum combination of the drying temperature and the drying duration.

Radiation heat drying, such as irradiation of far infrared or microwave, may be effective as a short period drying but, nevertheless, is liable to suffer from deterioration of the product quality due to an increase in the temperature of the material by the heat generated.

Finally, vacuum drying which is contributive to the prevention of deterioration of the product quality due to the oxidation by air, requires longer period of time for the practical operation, motivating to the installation of a large scale apparatus which requires higher operation costs for heating and maintenance of vacuum.

One of the annoying problem in the stand of the technique resides in, which device or instrument is to be chosen in view of the balance between the product quality, installation investment and operational costs, since, as discussed above, each drying technique has its own merits and demerits.

By the "crusher" as employed herein, it deals with a device for primary crushing or rough crushing that realizes production of a product of "powder" as recognizable in the common sence but not of ultrafine powder, while there are a large variety of crushing devices each adapted for each specific purpose.

For the prevention of deterioration of the product quality, employment of a short period lower temperature processing is essential, which requires cooling of the material under the processing, since any crushing work is accompanied by a heat generation. Moreover, the crushing should be accomplished under an inert atmosphere or under vacuum for avoiding the quality deterioration by oxidation. Though the crushing of the raw material does not constitute any critical process step at present, a product of more higher quality will be able to obtain, if the low temperature vacuum crushing can be realized at a cost similar to that with the conventional apparatus so long as the requirements as for the product quality are in compromise with the installation cost.

### OBJECT AND SUMMARY OF THE INVENTION

In consideration of the above circumstances, the object of the present invention is to provide a novel technique for producing preservative edible supplements for food products etc. from rootcrops which technique is adapted for treating rootcrops having irregular sizes and shapes and permits not only to maintain the intrinsic activity for preserving food etc. of the original raw crop material but also to avoid any deterioration of the functional properties of the food etc. with simultaneous utilization of the accompanied petioles and stalks of the rootcrop in the preservative supplement product.

The above object is achieved by the process for the production of preservative edible supplements for food etc. from rootcrops, which is characterized by carrying out the following process steps or any of combinations of such process steps successively, which process steps comprise
placing the rootcrop in a closed vessel,
subjecting the rootcrop to chopping or cutting while evacuating the vessel to a vacuum,
effecting a primary drying, followed by injection of an inert gas consisting of nitrogen or any other thereinto,
crushing the rootcrop,
spraying a synergist onto the crushed mass,
spraying a dry distillation liquid extract thereonto,
effecting a second drying of the resulting mass and
mixing the mass to a dispersed state.

### BRIEF DESCRIPTION OF THE DRAWINGS

Fig. 1 shows a comparison of the flow chart of the process steps between the present invention and the prior art.

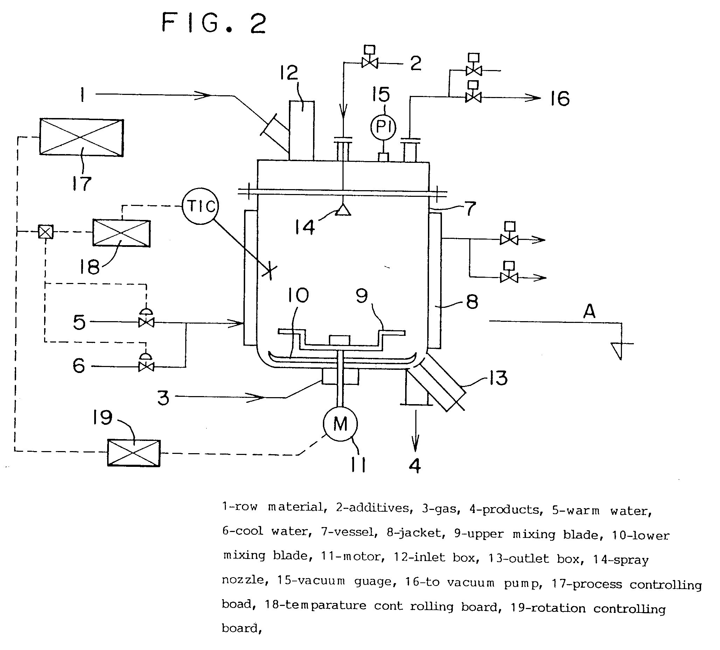

Fig. 2 illustrates an example of the processing vessel to be used according to the present invention in a schematic view.

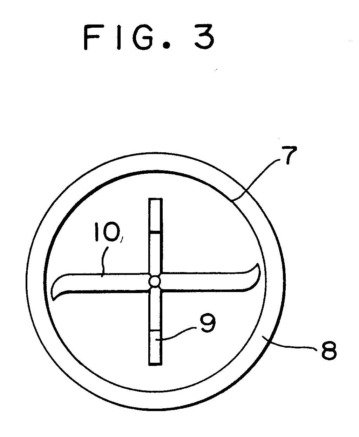

Fig. 3 is a section of the vessel of Fig. 2 along the line A of Fig. 2.

### DETAILED DESCRIPTION OF PREFERRED EMBODIMENTS

In the context of this specification, the "rootcrops" include every vegetable having an edible root portion, for example, potatos, sweet potatos, taros, Japanese taro and the like, among which white sweet potato is particularly adapted for the present invention. For such rootcrops, not only the tubers but also the petioles and stalks thereof are utilized, if necessary, with a combination of them.

The rootcrops are charged in a closed vessel in the as-harvested form or in a nearly as-harvested form, wherein the rootcrops may preferably be cleaned preliminarily by washing. It is permissible to charge the rootcrops in the vessel after they have been cut and/or dried and/or humidity-controlled. After the rootcrops have been charged in the vessel, all the processing operations are effected in this vessel without the rootcrops being transferred to any other vessel.

The vessel to be employed is furnished with mixing blades, a heating means and a tightly closing lid and is designed to allow the degree of vacuum of its inside space to be controlled. Every mixing blade can be used, so long as it allows cutting, crushing and mixing of the charged rootcrops, such as white sweet potato. For the heating means, a heating jacket surrounding the vessel can be employed, in which a hot heat medium, such as hot water or steam, is permitted to flow or other heat source, such as heater, is accomodated. For the control of the degree of vacuum in the inside space of the vessel, a vacuum pump may be installed to evacuate the vessel, wherein the degree of vacuum should preferably be monitored by a vacuum guage.

By the present invention, it is contemplated to process continuously the raw material charged in the vessel under application of vacuum. The charged raw material is processed first by cutting and, then, by a primary drying, followed by injection of an inert gas, such as nitrogen, thereinto. For the inert gas, carbon dioxide can be used and, of course, an iner gas mixture composed of, for example, nitrogen and other inert gas may also be used.

When the charged material has become ready for pulverization due to the primary drying, the mixing blades are rotated at a high revolution rate to effect the crushing of the charge. As the countermeasure for preventing the possible deterioration of the quality of the charged material due to the heat generated upon the crushing operation, it is preferable to carry out the crushing with cooling in such a manner, that a preliminary cooling of the charge is incorporated already in the primary drying on its final stage by changing over the operation of the processing apparatus from the heating mode to the cooling mode, in order to limit the temperature of the charge below a certain value.

Then, a synergist composed of organic acids such as citric acid, tartaric acid, ascorbic acid and so on, and a dry distillation liquid extract are sprayed on the so-processed mass, followed by a second drying and subsequent dispersing mixing. Alternatively, it is permissible to incorporate a combination of these operations in a continuous operation. For the dry distillation liquid extract, an extract of camellia leaves may preferably be used. By the spray addition of the liquid additives, the crushed mass becomes crumby or aglomerate, so that a further drying (second drying) and a further mixing (dispersing mixing) are to be incorpoarted to re-pulverize the mass.

In a preferred embodiment of the present invention, a starting rootcrop of white sweet potato is charged in the processing vessel and the lid thereof is closed tightly. The vessel is evacuated using a vacuum pump up to a degree of vacuum of 100 - 10 Torr, whereupon the mixing blades are started to rotate so as to effect cutting of the charged white sweet potato. This cutting operation is continued usually for a period of 5 - 6 minutes for general rootcrops, until the charged rootcrop is disintegrated into particles of a size of about 1 - 2 mm. The so-disintegrated charge is then subjected to a drying step (primary drying) while rotating the mixing blade at a circumferential velocity of 10 - 20 m/sec under heating at a heat source temperature of 25 - 50 °C and at a temperature of the processed material of 25 - 30°C . It is a matter of course that the periods for the cutting and for the drying can be different for each specific condition, such as the raw material charged and so on. The same applies also to the duration of the subsequent crushing operation.

When the moisture content of the processed mass has reached a value of 7 - 15 % by weight by the primary drying, the mixing blades are rotated at a high revolution rate to effect crushing of the so-dried granular mass. It is natural that the circumferential velocity of the mixing blade may be designed to be adjustable to cope with the operation conditions for the steps of cutting, drying and crushing. Also, the temperature of the processed material during the drying can be controlled by regulating the temperature of the heating source.

### Example 1

### Experiment 1 for Vacuum Drying Pulverization of White Sweet Potato "KUSANO No.1"

A raw material of rootcrop of KUSANO No. 1 with the botanical name "Lpomea batalas Lam" (a strain of white sweet potato registered according to the Agricultural Seeds and Seedlings Law of Japan) in the as-harvested form with irregular sizes and shapes was charged in a processing vessel after it had been washed with water, whereupon the processing steps of cutting, primary drying, injection of nitrogen gas, crushing of the drued cutted mass, spraying of liquid additives thereonto, second drying of the processed mass and dispersing mixing of the re-dried mass were carried out in this vessel under a vacuum condition. Sampling of the material under processing was effected during each processing step by opening the vessel, together with a visual investigation of the processed material.

Separately therewith, a parallel experiment was conducted in the same way but without incorporation of the vessel opening procedures for the period of prcessing steps from the cutting to the crushing, in order to examine the effect of the air oxidation of the processed material on the material properties.

The following experimental conditions were employed:

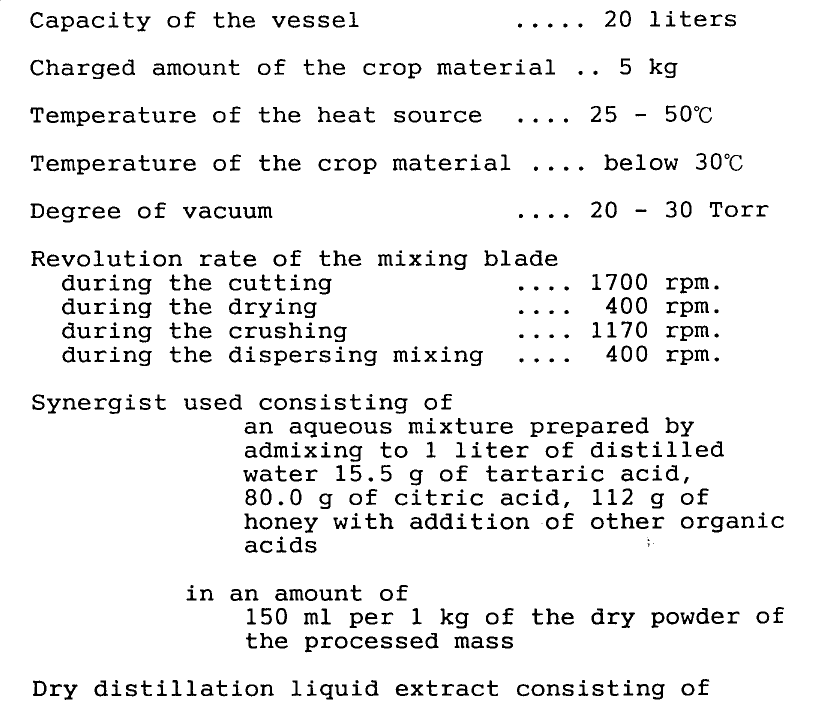

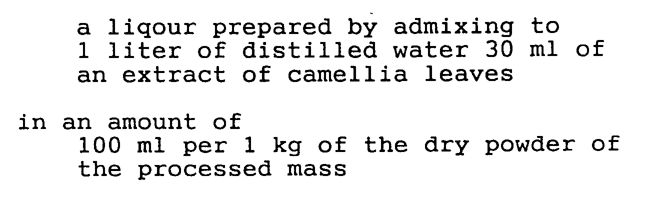

The experimental results were as given below:

### 1) Cutting:

A granular mass with particle sizes of 1 - 2 mm was obtained after a cutting period of 5 minutes.

### 2) Drying:

The granular mass was dried up to a moisture content of 11 % by weight after a drying period of 2 hours (See Table 1 below).

**Table 1**

| Drying time | Moisture cont. |
|---|---|
| 0 hr | 75.8 % |
| 1 hr | 42.4 % |
| 1.5 hr | 30.3 % |
| 2 hr | 11.0 % |

### 3) Crushing:

A pulverous mass with particle sizes of about 40 - 250µ m was obtained after a crushing period of 3 minutes.

### 4) Second drying after spraying of liquid additive:

The drying of the sprayed mass was reached within 30 minutes with a drying characteristic nearly the same to that of the primary drying.

### 5) Dispersing mixing:

The mixed mass became completely homogeneous after a mixing duration of 30 minutes.

### 6) Air oxidation due to vessel opening procedure:

The total time for the vessel to be left as being opened was about 20 minutes or so and, nevertheless, a clear difference in the hue of the product mass was recognized as compared with that in the comparison expariment without vessel opening procedure. It was therefore made clear that the material under processing should be protected against any contact thereof with air due to a handling procedure etc. as far as possible.

### 7) Analyzed composition of the processed product:

The composition of the resulting edible supplement was assessed as given in Table 2 below, showing that valuable matters, such as inorganic components and vitamins, are retained abundantly.

### 8) Occurence of objectionable odour

It was confirmed that an occurrence of peculiar odour due to the injection of nitrogen gas is avoided by the spray addition of the dry distillation liquid extract.

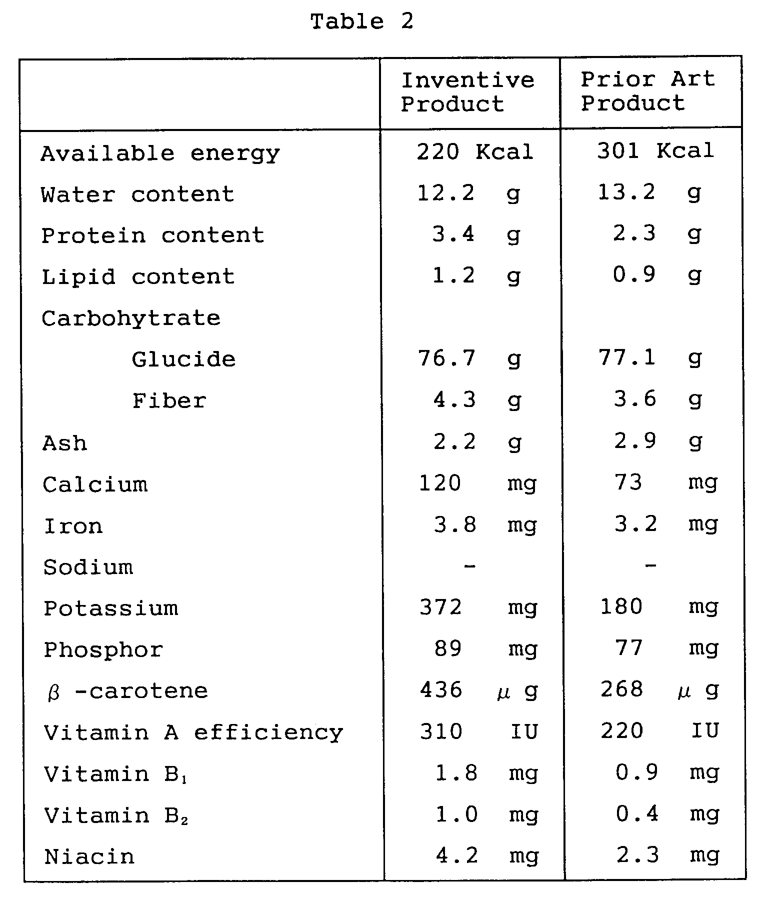

### Example 2

### Experiment 2 for Vacuum Drying Pulverization of Petioles of White Sweet Potato "KUSANO No. 1"

A water-washed raw material of petioles of the rootcrop KUSANO No. 1 in the as-harvested form with irregular sizes and shapes was charged in a processing vessel, whereupon the processing steps of cutting, primary drying, injection of nitrogen gas, crushing of the drued cutted mass, spraying of liquid additives thereonto, second drying of the processed mass and dispersing mixing of the re-dried mass were carried out in this vessel under a vacuum condition. Sampling of the material under processing was carried out during each processing step by opening the vessel, together with a visual investigation of the processed material.

Separately, a parallel experiment was conducted in the same way but without incorporation of the vessel opening procedures for the period of processing steps from the cutting to the crushing, in order to examine the effect of the air oxidation of the processed material on the material properties.

The following experimental conditions were employed:

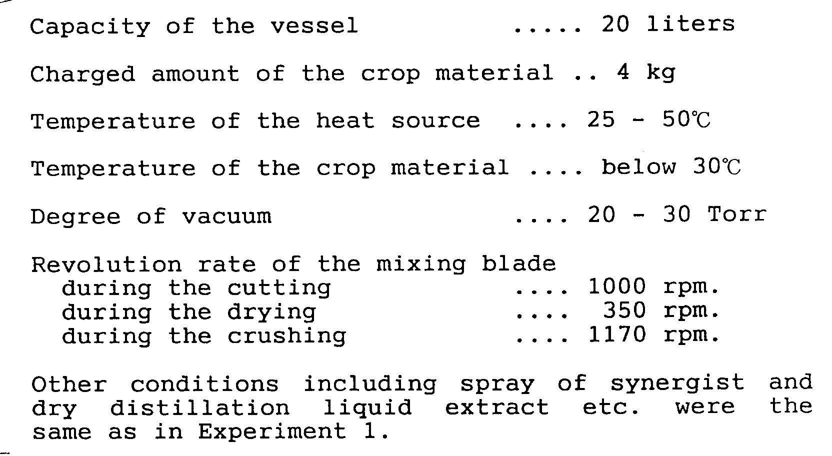

The experimental results were as given below:

### 1) Cutting:

A nearly pasty mass was obtained after a cutting period of 5 minutes.

### 2) Drying:

The pasty mass was dried up to a moisture content of 14 % by weight after a drying period of 2 hours (See Table 3 below).

**Table 3**

| Drying time | Moisture cont. |
|---|---|
| 0 hr | 91.5 % |
| 1 hr | 69.1 % |
| 1.5 hr | 41.0 % |
| 2 hr | 14.1 % |

### 3) Crushing:

A pulverous mass with particle sizes of about 40 - 250µ m was obtained after a crushing period of 3 minutes.

### 4) Air oxidation due to vessel opening procedure:

The total time for the vessel to be left opening was 15 minutes or so and, nevertheless, a clear difference in the hue of the product mass was recognized due to a little dark greening for the product with vessel opening, as compared with the product of the comparison expariment without vessel opening procedure. It was therefore made clear that the material under processing should be protected against any contact thereof with air due to a handling procedure etc. as far as possible.

### Example 3

### Experiment 3 for Vacuum Drying Pulverization of Stalks of White Sweet Potato "KUSANO No.1"

A water-washed raw material of stalks of the rootcrop KUSANO No. 1 in the as-harvested form with irregular sizes and shapes was charged in a processing vessel, whereupon the processing steps of cutting, primary drying, injection of nitrogen gas, crushing of the drued cutted mass, spraying of liquid additives thereonto, second drying of the processed mass and dispersing mixing of the re-dried mass were carried out in this vessel under a vacuum condition. Sampling of the material under processing was carried out during each processing step by opening the vessel, together with a visual investigation of the processed material.

Separately, a parallel experiment was conducted in the same way but without incorporation of the vessel opening procedures for the period of processing steps from the cutting to the crushing, in order to examine the effect of the air oxidation of the processed material on the material properties.

The following experimental conditions were employed:

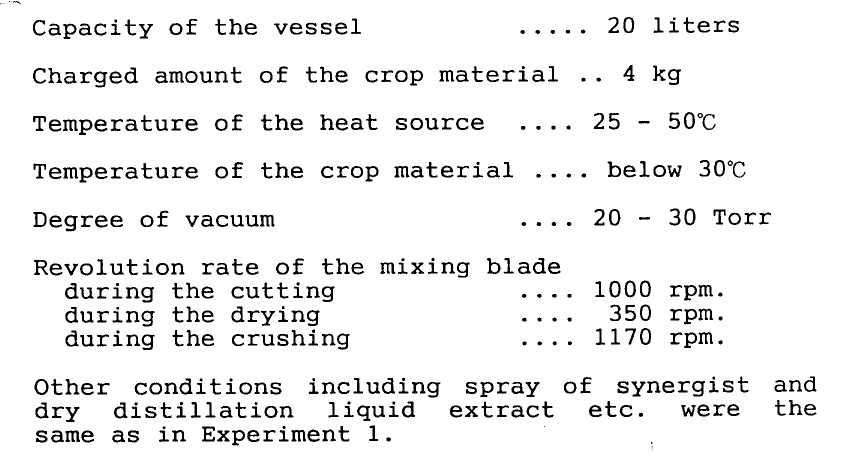

The experimental results are as given below:

### 1) Cutting:

A nearly pasty mass was obtained after a cutting period of 5 minutes.

### 2) Drying:

The pasty mass was dried up to a moisture content of 13 % by weight after a drying period of 2 hours (See Table 4 below).

**Table 4**

| Drying time | Moisture cont. |
|---|---|
| 0 hr | 91.5 % |
| 1 hr | 69.1 % |
| 1.5 hr | 41.0 % |
| 2 hr | 14.1 % |

### 3) Crushing:

A pulverous mass with particle sizes of about 40 - 250µ m was obtained after a crushing period of 3 minutes.

### 4) Air oxidation due to vessel opening procedure:

The total time for the vessel to be left opening was 15 minutes or so and, nevertheless, a clear difference in the hue of the product mass was recognized due to a little dark greening for the product with vessel opening, as compared with the product of the comparison expariment without vessel opening procedure exhibiting a faintly greenish yellow hue. It was therefore made clear that the material under processing should be protected against any contact thereof with air due to a handling procedure etc. as far as possible.

As described in detail above, the process according to the present invention provides a series of inventive effects as follows:
(1) It permits an integral processing of the raw material by carrying out the process steps, which comprise cutting the raw material, effecting a primary drying of the so-disintegrated material, injecting thereinto a gas for improving the product quality, crushing the so-treated mass into powdery state, adding thereto liquid additives for improving the product quality by spraying them on the pulverous mass, effecting a second drying of the resulting mass and dispersingly mixing the dried mass, in one and the same processing vessel, whereby the number of devices and instruments for realizing these process steps can be dispensed with, while simultaneously attaining exclusion or reduction of handling apparatuses therefor and the cushioning tanks between the steps.
   Moreover, the process according to the present invention brings about the following advantages:
   a) Easier operation practices as compared with the prior technique, due to the considerable reduction of the number of devices and instrument.
   b) A reduction of labor load in the daily works for maintening and cleaning the installations, as compared with the prior technique, due to the considerable reduction of the number of devices and instruments.
   c) A higher productivity as compared with the prior technique, due to the lower frequency of occurrence of troubles by the considerable reduction of the number of devices and instruments (the devices for effecting handling treatments that have no correlation with the intrinsic performance of the process exhibit a higher frequency of disorder occurrence).
   d) A lower investment for installations, as compared with the prior technique, due to the considerable reduction of the number of devices and instruments.
   e) A smaller installation area, as compared with the prior technique, due to the considerable reduction of the number of devices and instruments.
   f) A lower cost for the maintenance and regulation, as compared with the prior technique, due to the considerable reduction of the number of devices and instruments.
   g) Exclusion of adhesion of the processed material on the surfaces of the installations such as the intermediate apparatuses, as contrasted to the prior technique, since all the processing steps are effected in one and the same vessel.
(2) By realizing all the processing operations under exclusion of air, prevention of deteriorations of the product quality due to oxidation by the presence of air oxygen and procesing under exclusion of pollutant bacteria in the air can effectively realized in an eonomical manner under an aseptic and better hygienic condition.
   The technical measure of realizing the cutting and crushing of the raw material under exclusion of air is not a general practice in the stand of the technique and it is still more difficult to infer the technical measure of exclusion of the air from the devices for handling the processed material or from the cushioning tanks realistically.
   By this technical measure, a product having higher quality than those of the prior art can be obtained according to the present invention. Moreover, there is a sufficient probability for ralizing a better product quality according to the present invention than that attained by the freeze drying technique, since conventional freeze drying cannot overcome the problem of air oxidation and dissipation of the valuable components into the atmosphere during the process steps of cutting and handling of the processed material.
(3) According to the present invention, an improvement in the productivity and prevention of the deterioration of the product quality are achieved simultaneously by reducing the entire processing time from the raw material charging to the final mixing. For this, especially the drying periods are limited so as to preserve the requisite product quality.
(4) Activation of the effective components and improvement of the preservative property can be attained so much, as the penetration of the treating gas is facilitated by the injection thereof into the vessel held under vacuum. Thus, the present invention permits to obtain a product with better quality or, if not, a product with at least comparable quality in a more economical manner.
(5) A further contribution to the prevention of the quality deterioration is attainable by realizing the processing operation in the crushing step with cooling of the processed material preliminarily by changing over the operation mode in the final stage of the foregoing drying step from the heating mode into the cooling mode, in order to limit the temperature of the crushed mass below a certain permissible value for avoiding any quality deterioration due to heat.
(6) A prompt evaporation of moisture is attained under exclusion of oxidative deterioration of the product quality by crushing the granulated mass of the processed material under a reduced pressure to attain a larger specific surface area and to facilitate the evaporation from the solid surfaces.
   In the prior technique, it is usual to effect cutting of the starting rootcrop with sharp blades in such a manner that a product cut into a shape of small dice is obtained so as not to lose the moisture content as well as the content of useful components as far as possible. There is a limitation in the size of the cut dice in view of the moiasture loss and of the cutting efficiency. Thus, the process according to the present invention can afford to offer a prompter drying rate as compared with such prior technique.
   In addition, the vacuum cutting technique according to the present invention is not a general practice and there is no large scale apparatus commercially available therefor, so that the prior cutting technique consists in a duplicate cutting to obtain the product in the form of dice. Therefore, the practical manner of cutting in the process according to the present invention as a pretreatment for the subsequent drying is quite superior in view of the productivity and product quality as compared with the prior technique.
(7) The process according to the present invention is further superior in the drying velocity as compared with the prior technique. As the rate determining step for the drying velocity, parameters for conducting heat to the material to be processed, namely, heat transfer rate, evaporation rate and so on are considered. As the rate determining step for the heat transfer rate, the temperature difference between the material to be processed and the heat source, heat conductivity, heat condicting surface area and so on are considered. Finally, as the rate determining step for the evaporation rate, there may be considered the temperature difference between the equillibrium temperature of the vacuum system and the temperature of the material to be processed, thermal conductivity, evaporation surface area, evaporation temperature and so on.

To achieve a higher drying rate and a higher heat transfer rate, it is necessary to increase the strength of the material against agitation so as to realize an increased frequency of contact of the material with the heating surface and an increased and refreshed effective surface area for the evaporation.

By the process according to the present invention, it is permissible to use every rootcrop regardless of its size and shape and of the plant part including the stalks and the petioles, since all the process steps are realized in one and the same processing vessel. The process according to the present invention provides an edible preservative supplement for food product under retention of abundant useful components, such as minerals, vitamins and inorganic components with larger amount of the micro-components contributing to the presavativity of food dorduct etc. without the preservative activity of the edible supplement and the adaptability of the food being injured by the process.

## Claims

1. A process for the production of preservative edible supplements for food etc. from rootcrops, by procesing them into dry powder, charactrized by the process steps, comprising
placing the rootcrop in a closed vessel,
subjecting the rootcrop to chopping or cutting while evacuating the vessel to a vacuum,
effecting a primary drying, followed by injection of an inert gas consisting of nitrogen or any other thereinto,
crushing the rootcrop,
spraying a synergist onto the crushed mass,
spraying a dry distillation liquid extract thereonto,
effecting a second drying of the resulting mass and
mixing the dried mass to a dispersed state. said process steps being realized successively or in any combination.

2. A process as calimed in Claim 1, wherein said rootcrop is white sweet potato.

3. A process as calimed in Claim 1, wherein said rootcrop conprises any plant portion consisting of root part, petioles and stalks of a rootcrop inclusive of white sweet potato, or any combination of such plant portions.

4. A process as calimed in Claim 1, wherein said rootcrop is charged in the vessel in the as-harvested form or nearly as-harvested form with irregular sizes and shapes.

5. A process as calimed in Claim 1, wherein said rootcrop is charged in the vessel after is has been subjected preliminarily to slicing, drying or moisture-controlling.

6. A process as calimed in Claim 1, wherein said inert gas is carbon dioxide.

7. A process as calimed in Claim 1, wherein said crushing is realized under incorporation of cooling of the processed material by preliminarily cooling the dried mass.
